Europäisches Patentamt

European Patent Office

Office européen des brevets

(11) Publication number: **0 184 214**
**B1**

## EUROPEAN PATENT SPECIFICATION

(45) Date of publication of patent specification: **24.10.90**

(21) Application number: **85115528.3**

(22) Date of filing: **06.12.85**

(51) Int. Cl.⁵: **H 01 J 61/33, H 01 J 61/54,
H 05 B 41/18**

(54) Compact fluorescent lamp assembly.

(30) Priority: **06.12.84 US 678929**

(43) Date of publication of application:
**11.06.86 Bulletin 86/24**

(45) Publication of the grant of the patent:
**24.10.90 Bulletin 90/43**

(84) Designated Contracting States:
**BE DE FR GB NL**

(56) References cited:
**FR-A-2 299 723
US-A-3 996 493
US-A-4 288 725**

(73) Proprietor: **GTE Products Corporation
100 West 10th Street
Wilmington, DE 19801 (US)**

(72) Inventor: **Pai, Robert Y.
27 Juniper Road
Hamilton, MA (US)**

(74) Representative: **Patentanwälte Grünecker,
Kinkeldey, Stockmair & Partner
Maximilianstrasse 58
D-8000 München 22 (DE)**

Courier Press, Leamington Spa, England.

## Description

### Background of the invention

This invention relates to a fluorescent lamp assembly and, in particular, to a fluorescent lamp assembly which is compact, lightweight and efficient.

The fluorescent lamp is one of the most widely utilized light source in the world for general illumination, primarily because of its relatively low initial cost and its efficacy; i.e., its light output relative to its power input, usually expressed as lumens per watt (LPW). Nevertheless, for home use, the fluorescent lamp has not taken precedence over the incandescent lamp. Many reasons have been advanced for this lack of acceptance, among them the poor color rendition of some fluorescent lamps and their need for a ballast. However, one of the major disadvantages lies in the fact that a fluorescent lamp is a linear light source whereas an incandescent lamp can almost be considered a point source.

It is desirable to have the combination of lamp and ballast as compact, lightweight and efficient as possible.

One such lightweight ballast is disclosed in U.S. Patent No. 3,996,493 dated December 7, 1946 to Davenport et al. This patent discloses an integral self-contained fluorescent lamp unit comprising a conventional, elongated lamp and an elongated ballast resistor carried in an outwardly extending housing member positioned alongside the lamp. The use of a resistive ballast is lighter in weight and less expensive than an inductive ballast; however, the system is less efficient.

French Patent No. 2299723 discloses a fluorescent lamp assembly for operation from a source of AC line voltage comprising in combination:

a fluorescent lamp having an envelope of substantially circular configuration in cross-section, said envelope having a first end portion provided with a first electrode including first and second terminals and a second end portion provided with a second electrode including first and second terminals, at least one phosphor layer disposed on the interior surface of said envelope, an ionizable medium enclosed within said envelope including an inert starting gas and a quantity of mercury for producing a plasma discharge when a predetermined voltage is applied across said electrodes, said envelope including at least one constricting portion located therein for constricting said plasma discharge to provide an increase in the voltage across said lamp, said constricting portion extending substantially about the circular periphery of said envelope and projecting therein;

first and second input connections across said source of line voltage;

ballasting means;

starter means; and

means connecting said first terminal of the second electrode of said lamp to said second input terminal.

Another lightweight ballast is disclosed in U.S. Patent No. 4,288,725 dated September 8, 1981 to Morton. The Morton patent discloses a lightweight starting and operating ballasting means for starting and operating a conventional fluorescent lamp utilizing a series connected resistor and capacitor.

Fluorescent lighting systems, as mentioned above, which use purely or partly resistive ballasting both consume unnecessary power and are generally inefficient.

Capacitors, which are lightweight and consume very little power, have not been used independently to ballast conventional fluorescent lamps. In low frequency (50—60 Hertz) a.c. current circuits, the purely capacitive ballast produces instability in the discharge and destructively high current crest factors (i.e. the ratio of the peak value of current to the average value).

Short arc length fluorescent lamps (i.e. less than about 120 mm) have been found to operate on capacitive ballasts without instability and high current crest factors. The lamp voltage upon reignition in each half cycle of the line voltage can be less than the average voltage. The voltage is not redistributed on reignition and the capacitor does not need to be charged up immediately. Consequently, there is no current spike at reignition.

The conventional short arc length, low voltage fluorescent lamps operating on a capacitor (or inductor) usually have a low efficiency, since the shorter discharge path results in relatively smaller power dissipation in the positive column.

### Brief summary of the disclosure

It is, therefore, an object of this invention to obviate the disadvantages of the prior art.

It is a more particular object of this invention to provide a fluorescent lamp assembly which is compact, lightweight and efficient.

These objects are accomplished, in one aspect of the invention, by the provision of a fluorescent lamp in which said ballasting means is a means in which the capacitive reactance is the dominant impedance, which is series connected between said first input terminal and said first terminal of the first electrode of said lamp, the arc length between said first and second electrodes being not greater than about 120 mm and said starter means is connected between said second terminal of the first electrode of said lamp and said second terminal of the second electrode of said lamp.

### Brief description of the drawings

Fig. 1 is a perspective view of a lamp having constricting portions;

Fig. 2 is a partial longitudinal cross-sectional view of the lamp of Fig. 1;

Fig. 3 is an enlarged partial cross-sectional view of the lamp of Fig. 1; and

Fig. 4 is a schematic circuit diagram of an embodiment of a fluorescent lamp assembly according to the invention.

## Detailed description of the preferred embodiment

For a better understanding of the present invention, together with other and further objects, advantages, and capabilities thereof, reference is made to the following disclosure and appended claims taken in conjunction with the above described drawings.

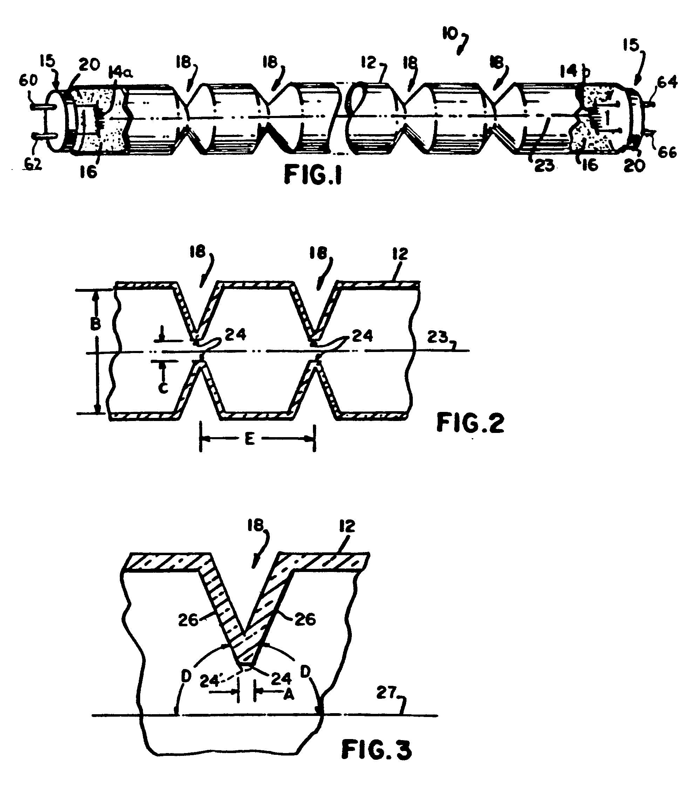

Referring now to the drawings with greater particularity Fig. 1 shows a preferred embodiment of a fluorescent lamp 10 for use in the assembly of the invention. The lamp 10 includes an envelope 12 of substantially circular configuration in cross-section which is generally made of light-transmitting soda-lime or lead glass. The maximum outside diameter of envelope 12 is preferably 10 mm (i.e. T6) or greater. Each end portion 15 of envelope 12 is provided with an electrode 14(a, b). The arc length distance which is the distance between electrodes 14(a, b) is not greater than about 120 mm. Preferably the arc length is within the range of from about 60 mm to about 120 mm. At least one phosphor layer 16 is disposed on the interior surface of envelope 12. Envelope 12 encloses an ionizable medium including a quantity of mercury and an inert starting gas. The gas may consist of argon, neon, helium or other inert gas or a combination thereof at a low pressure in the range of about 1 to 4 mmHg. Lamp 10 may include end caps 20 with corresponding electrical terminals (60, 62; 64, 66) attached at each end. Although an end cap 20 with a pair of terminals (60, 62; 64, 66) is shown in Fig. 1, the present invention is also applicable to other end cap types, for example single pin or recessed pins. The lamp may be without conventional end caps, e.g., as in the case of an integral lamp/ballast package; each of the lamp ends in this case can be contained within a housing made of plastic or other suitable material. The lamp envelope configuration may differ from the tubular-shaped lamp shown in Fig. 1. The lamp envelope, for example, may be bent in the shape of a U, in which case both ends of the lamp can be contained within a single housing, which may also include a ballasting means and a starter means.

The envelope 12 includes at least one or preferably a plurality of constricting portions 18, axially spaced apart and extending substantially about the circular periphery of the envelope 12. Each of the constricting portions 18, as shown in the partial cross-sectional views of Figs. 2 and 3, contains a defined end segment 24 projecting within the envelope 12. End segment 24 is that section of the constricting portion 18 which deviates from the angle of the sidewalls 26. The cross-section of end segment 24 need not have a flat surface (as shown for 24) but may have a curved or bowed surface, illustrated as 24'. An arc length axis 23 is defined by an imaginary line extending from one electrode to the other electrode passing through the cross-sectional midpoint of the entire envelope.

Theoretically, the length A of end segment 24 should not be more than the electron energy relaxation distance $d_r$ for the conditions of the discharge within the lamp (i.e., gas type, gas pressure, electron temperature, etc.). The electron energy relaxation distance $d_r$ is a well known quantity which, in a low pressure positive column discharge, is defined by the equation:

$$d_r^{-1} = [(3P_{Hg}Q_{in}^{Hg} + 3P_R Q_{in}^R)(P_{Hg}Q^{Hg} + P_R Q^R)]^{1/2}$$

where

$P_{Hg}$ is the mercury number density in the vapor,

$P_R$ is the rare gas number density,

$Q_{in}^{Hg}$ is the total inelastic scattering cross-section for the electrons by Hg,

$Q_{in}^R$ is the total inelastic scattering cross-section for the electrons by gas,

$Q^{Hg}$ is the total elastic scattering cross-section for electrons by Hg,

$Q^R$ is the total elastic scattering cross-section for electrons by gas.

Since electron energy relaxation is known to be a continuously occurring process, the length A is not expected to be exactly $d_r$. Empirically, the length A of the end segment can be within the range of from about 0.02 to 1 times the electron energy relaxation distance $d_r$. Generally A is within the range of from about 0.1 millimeter to about 2.0 millimeters. For example, for a neon fill gas at a pressure of 2 torr at 25°C, $d_r$ equals approximately 5 mm; for argon at a pressure of 2 torr at 25°C, $d_r$ equals approximately 1.5 mm.

The preferred lamp 10 contains constricting portions 18 which are all of substantially uniform depth and shape and are spaced apart equally by a separation distance E. The distance E is measured axially within the envelope between the midpoints of the end segments of a pair of adjacent constricting portions. Changing the value E affects both the voltage generated across the lamp and also the efficiency of light generated. It has been found that E should be equal to at least the difference between the maximum internal diameter B and the minimum internal diameter C of the envelope for proper relaxation of the plasma discharge. Typical values for the separation distance are within the range of from about 25 millimeters to about 100 millimeters.

Significant increases in lamp voltage can be achieved when the ratio of the maximum internal diameter B of the envelope to the minimum internal diameter C is within the range of ratios B:C of about 2:1 to 10:1 or greater. At the same time, the length A should not be more than the electron energy relaxation distance $d_r$ of the lamp.

As best shown in the enlarged partial cross-sectional view of Fig. 3, the cross-sectional shape of the each constricting portion 18 of the envelope 12 is substantially in the form of a V having an end segment 24 and a pair of opposed sidewalls 26. Constricting portion 18 is preferably symmetrical about its center line; or in other words, each of the sidewalls 26 forms the same angle D with an imaginary line 27 parallel to the arc length axis 23. Preferably the sidewall angle D is within the range of from about 45 degrees to about 90 degrees.

In one example of a fluorescent lamp made with constricting portions 18, the envelope 12 was made of T17 size glass tubing having a maximum internal diameter B equal to about 52 mm. Three constricting portions 18 were formed in the envelope 12 having a separation distance E equal to about 50 mm, an axial end segment 24 length A of approximately 1 mm, and minimum internal envelope diameter C of 6 mm and sidewall angle D of 45°. The resulting ratio B:C was equal to 8.7:1. The fill gas used was 100 percent neon at a pressure of about 2.0 mmHg.

The following table shows the electrical parameters measured for both the above mentioned constricted lamp along with a control lamp (a similar T17 lamp without constricting portions) operating on a standard 120 volt, 60 cycle lag-type ballast circuit. The arc length in both lamps was approximately 120 mm.

|  | Control lamp | Constricted lamp |
|---|---|---|
| Volts | 23.0 | 53.0 |
| Amperes | .450 | .460 |
| Watts | 10.0 | 23.0 |
| Lumens | 410 | 1000 |
| LPW | 41.0 | 43.5 |

The above table shows an increase in both lamp voltage and wattage for the constricted lamp. The constricted lamp yielded approximately 10 volts for each constriction.

The exact dependence of the increase in voltage on the parameters A, B, C, D and E are difficult to calculate due to the presence of many different interrelated processes which contribute to the discharge. However, certain general empirical relations can be made. Increases in the voltage per constriction were directly proportional to increases in the ratio B:C, the sidewall angle D, or the separation distance E.

Although the specific values of the voltage per constriction may vary for different values of the parameters A, B, C, D and E, a general trend in which a B:C constriction ratio of 2:1 to 3:1 yields a voltage per constriction of about 6 volts has been observed in other examples. The values used in examples for A were 1 mm to 2 mm; for B were 35 mm to 64 mm; for C were 3 mm to 15 mm; for D were 45° to 90°; for E were 25 mm to 40 mm. A neon gas fill of 2 torr and a mercury vapor density appropriate for 25°C to 50°C were used.

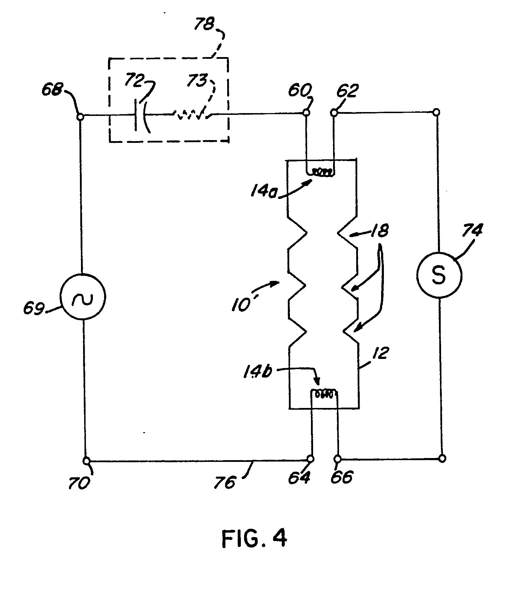

Fig. 4 shows a circuit diagram of one embodiment of a fluorescent lamp assembly according to the invention. A fluorescent lamp 10' is shown having an envelope 12 with a first end portion provided with a first electrode 14a including a first terminal 60 and a second terminal 62. A second end portion of envelope 12 is provided with a second electrode 14b which includes a first terminal 64 and a second terminal 66. Envelope 12 contains a plurality of constricting portions 18 as previously described.

A first input terminal 68 and a second input terminal 70 are provided for connection across a source 69 of AC line voltage.

A lead-type ballasting means 78 is connected between the first input terminal 68 and the first terminal 60 of first electrode 14a of the lamp 10'. Ballasting means 78 in Fig. 4 comprises a capacitor 72 of predetermined value chosen so as to obtain the desired lamp starting and operating parameters. Preferably, the value of capacitor 72 is within the range of from about 9 microfarads to about 30 microfarads. An optional resistor 73 of predetermined value may be included as part of lead-type ballasting means 78 and connected in series with capacitor 72. Resistor 73 is included to add additional ballasting if needed to obtain stable operation in some instances. Preferably, the value of resistor 73 is within the range of from about 5 ohms to about 10 ohms.

A starter means 74, which may be in the form of a conventional glow-bottle starter or an electronic-type starter for instance, is connected between the second terminal 62 of the lamp electrode 14a and the second terminal 66 of lamp electrode 14b.

A connecting means 76, which may be in the form of for example a wire conductor, wire connector, or solder joint, connects the first terminal 64 of lamp electrode 14b to the second input terminal 70.

In an example of a fluorescent lamp made in accordance with the invention and operated in a circuit as shown in Fig. 4, the envelope 12 of lamp 10' was made of T8 glass tubing (1.0 inch diameter or 25.4 mm). Two constricting portions were formed in the envelope to have a separation distance E equal to about 75 mm, an axial end segment 24 length A of approximately 1 mm, a minimum internal envelope diameter C of 12 mm and an angle D equal to about 60 degrees. The resulting ratio B:C was equal to 2:1. The arc length of the lamp was equal to 120 mm. The fill gas used was 100 percent neon at a pressure of about 2 mmHg. The electrical parameters measured for the circuit of Fig. 4 with the value of capacitor 72 equal to 20 microfarads and resistor 73 not included were:

| Volts | 35.0 |
|---|---|
| Amperes | .940 |
| Power | 28.7 |
| Current Crest Factor | 1.8 |
| Lumens | 1080 |
| LPW | 37.6 |

The manufacture of an envelope 12 with constrictions of the form as described may be accomplished by heating an envelope 12 of round cross-sectional configuration to the softening point of the glass. While the envelope 12 is under pressure, the constrictions 18 are pressed into the envelope 12 wall by a mold. Alternaitvely, the constrictions 18 can be formed by a ribbon machine type operation in which the heated envelope 12 is blown into shape within a mold.

After the glass envelope 12 is formed, the remaining steps for making a complete fluorescent, low pressure discharge lamp are identical to those for conventional lamps. Due to the relatively large opening at each constriction, a normal phosphor coating process, such as application of a slurry of phosphor is in an organic or water base, can be used. The phosphor coated envelope is then processed into a fluorescent lamp in the usual conventional manner.

While there have been shown what are at present considered to be preferred embodiments of the invention, it will be apparent to those skilled in the art that various changes and modifications can be made herein without departing from the scope of the invention as defined by the appended claims.

## Claims

1. A fluorescent lamp assembly for operation from a source of AC line voltage comprising in combination:

a fluorescent lamp (10) having an envelope (12) of substantially circular configuration in cross-section, said envelope (12) having a first end portion (15) provided with a first electrode (14a) including first and second terminals (60, 62) and a second end portion (15) rpovided with second electrode (14b) including first and second terminals (64, 66), at least one phosphor layer (16) disposed on the interior surface of said envelope (12), an ionizable medium enclosed within said envelope (12) including an inert starting gas and a quantity of mercury for producing a plasma discharge when a predetermined voltage is applied across said electrodes (14a, b), said envelope (12) including at least one constricting portion (18) located therein for constricting said plasma discharge to provide an increase in the voltage across said lamp, said constricting portion (18) extending substantially about the circular periphery of said envelope (12) and projecting therein;

first (68) and second (70) input terminals for connection across said source (69) of line voltage; a ballasting means (78), starter means (74) and means (76) connecting said first terminal (64) of the second electrode (14b) of said lamp (10) to said second input terminal (70), characterized in that said ballasting means (78) is a means in which the capacitive reactance is the dominant impedance, which is series connected between said first input terminal (68) and said first terminal (60) of the first electrode (14a) of said lamp (10); the arc length between said first (14a) and second (14b) electrodes being not greater than approximately 120 mm; and that said starter means (74) is connected between said second terminal (62) of the first electrode (14a) of said lamp (10) and said second terminal (66) of the second electrode (14b) of said lamp (10).

2. The fluorescent lamp assembly of Claim 1 wherein said arc length is within the range of from about 60 mm to about 120 mm.

3. The fluorescent lamp assembly of Claim 1 wherein said constricting portion (18) includes a defined end segment (24) thereon projecting within said envelope (12), said constricting portion (18) having opposed sidewalls (26) forming substantially the same angle D with an imaginary line parallel to said arc length axis.

4. The fluorescent lamp assembly of Claim 1 wherein said envelope (12) comprises a plurality of constricting portions (18) axially spaced apart and located therein, each of said constricting portions (18) extending substantially about the circular periphery of said envelope (12) and projecting therein.

5. The fluorescent lamp assembly of Claim 4 wherein each of said constricting portions (18) includes a defined end segment (24) thereon projecting within said envelope, each of said constricting portions (18) having opposed sidewalls (26) forming substantially the same angle D with an imaginary line parallel to said arc length axis.

6. The fluorescent lamp assembly of Claim 1 wherein said lead-type ballasting means (78) comprises a capacitor (72) of predetermined value.

7. The fluorescent lamp assembly of Claim 6 wherein said predetermined capacitor (72) value is within the range of from about 9 microfarads to about 30 microfarads.

8. The fluorescent lamp assembly of Claim 6 wherein said lead-type ballasting means (78) further includes a resistor (73) of predetermined value connected in series with said capacitor.

9. The fluorescent lamp assembly of Claim 8 wherein said predetermined resistor (73) value is within the range of from about 5 ohms to about 10 ohms.

10. The fluorescent lamp assembly of Claim 9 wherein said predetermined capacitor (72) value is within the range of from about 9 microfarads to about 30 microfarads.

## Patentansprüche

1. Eine Fluoreszenzlampenbaugruppe, die durch eine eine Wechselspannungsleitung aufweisende Spannungsquelle betreibbar ist und in Kombination umfaßt:

Eine Fluoreszenzlampe (10), die eine Hülle (12) von einer im Querschnitt im wesentlichen kreisförmigen Konfiguration aufweist, wobei die Hülle (12) einen ersten Endteil (15), der mit einer ersten Elektrode (14a) versehen ist, die einen ersten und einen zweiten Anschluß (60, 62) enthält, und einen zweiten Endteil (15) aufweist, der mit einer zweiten Elektrode (14b) versehen ist, die einen ersten und einen zweiten Anschluß (64, 66) enthält, wenigstens eine Phosphorschicht (16), die auf der inneren Oberfläche der Hülle (12) angeordnet ist, ein ionisierbares Medium, das innerhalb der Hülle (12) eingeschlossen ist, und ein inertes Startgas und eine Quecksilbermenge zur Erzeugung einer Plasmaentladung enthält, wenn eine vorbestimmte Spannung an die Elektroden (14a, b) angelegt ist, wobei die Hülle (12) wenigstens einen Einschnürungsbereich (18) enthält, der darin zum Einschnüren der Plasmaentladung angeordnet ist, um für ein Anwachsen der Spannung über der Lampe zu sorgen, wobei der einschnürungsbereich (18) sich im wesentlichen um den kreisförmigen Randbereich der Hülle (12) erstreckt und in die Hülle hinein vorsteht;

einen ersten (68) und einen zweiten (70) Eingangsanschluß zur Verbindung mit der aus einer Leitungsspannung bestehenden Quelle (69); einer Belastungseinrichtung (78), einer Startereinrichtung und einer Einrichtung (67), die den ersten Anschluß (64) der zweiten Elektrode (14b) der Lampe (10) mit dem zweiten Eingangsanschluß (70) verbindet, dadurch gekennzeichnet, daß die Belastungseinrichtung (78) eine Einrichtung ist, in welcher der kapazitive Blindwiderstand die dominante Impendanz darstellt, welche in Reihe zwischen dem ersten Eingangsanschluß (68) und dem ersten Anschluß (60) der ersten Elektrode der Lampe (10) geschaltet ist; daß die Lichtbogenlänge zwischen der ersten (14a) und der zweiten (14b) Elektrode nicht größer als ungefähr 120 mm ist; und daß die Startereinrichtung (74) zwischen dem zweiten Anschluß (62) der ersten Elektrode (14a) der Lampe (10) und dem zweiten Anschluß (66) der zweiten Elektrode (14b) der Lampe (10) angeschlossen ist.

2. Fluoreszenzlampenbaugruppe nach Anspruch 1, wobei die Lichtbogenlänge innerhalb eines Bereiches von 60 mm bis 120 mm liegt.

3. Fluoreszenzlampenbaugruppe nach Anspruch 1, wobei der Einschnürungsbereich (18) ein definiertes Endsegment (24) enthält, das innerhalb der Hülle (12) vorsteht, und der Einschnürungsbereich (18) gegenüberliegende Seitenwände aufweist, die im wesentlichen denselben Winkel D zu einer imaginären, zu der Bogenlängenachse parallelen Linie einnehmen.

4. Fluoreszenzlampenbaugruppe nach Anspruch 1, wobei die Hülle (12) eine Vielzahl von einschnürungsbereichen (18), die axial voneinander beabstandet und darin angeordnet sind, umfassen, wobei jeder Einschnürungsbereich (18) sich im wesentlichen über den kreisförmigen Randbereich der Hülle (12) erstreckt und dort hinein vorsteht.

5. Fluoreszenzlampenbaugruppe nach Anspruch 4, wobei jeder der Einschnürungsbereiche (18) ein definiertes Endsegment (24) enthält, das innerhalb der Hülle vorsteht, wobei die Einschnürungsbereiche (18) gegenüberliegende Seitenwände (26) aufweisen, die im wesentlichen den gleichen Winkel D mit einer parallel zu der Bogenlängenachse verlaufenden imaginären Linie bilden.

6. Fluoreszenzlampenbaugruppe nach Anspruch 1, wobei die Belastungseinrichtung (78) eine Kapazität (72) mit einem vorbestimmten Wert umfaßt.

7. Fluoreszenzlampenbaugruppe nach Anspruch 6, wobei der vorbestimmte Wert der Kapazität (72) innerhalb eines Bereiches von etwa 9 bis etwa 30 Mikrofarad liegt.

8. Fluoreszenzlampenbaugruppe nach Anspruch 6, wobei die Belastungseinrichtung (78) weiterhin einen Widerstand (73) von einem vorbestimmten Wert umfaßt, der in Reihe mit dem Kondensator geschaltet ist.

9. Fluoreszenzlampenbaugruppe nach Anspruch 8, wobei der vorbestimmte Wert des Widerstands (73) innerhalb eines Bereiches von etwa 5 bis 10 Ohm liegt.

10. Fluoreszenzlampenbaugruppe nach Anspruch 9, wobei der vorbestimmte Wert der Kapazität (72) innerhalb des Bereiches von etwa 9 bis 30 Mikrofarad liegt.

**Revendications**

1. Lampe fluorescente fonctionnant à partir d'une source de tension alternative de réseau, comprenant un combinaison:

une lampe fluorescente (10) comprenant une ampoule (12) de forme substantiellement circulaire en coupe, la dite ampoule (12) ayant une première extrémité (15) comportant une première électrode (14a) incluant des première et une seconde bornes (60, 62), et une seconde extrémité (15) comportant une seconde électrode (14b) incluant des première et seconde bornes (64, 66), au moins une couche de luminophores (16) disposée sur la paroi intérieure de la dite ampoule (12), un milieu ionisable enfermé dans la dite ampoule (12) et incluant un gaz d'amorçage inerte et une quantité de mercure pour produire une décharge en plasma lorsqu'une tension déterminée est appliquée entre les dites électrodes (14a, 14b), ladite ampoule (12) comportant au moins une partie étranglée (18) pour étrangler la dite décharge en plasma pour déterminer une augmentation de la tension appliquée à la dite lampe, la dite partie étranglée (18) s'étendant substantiellement sur la périphérie circulaire de la dite ampoule (12) et faisant saillie à l'intérieur de celle-ci;

des première (68) et seconde (70) bornes d'entrée pur une liaison à la dite source (69) de tension de réseau;

un moyen de ballast (78), un moyen d'amorçage (74) et des moyens (76) reliant ladite première borne (64) de la seconde électrode (14b) de la dite lampe (10) à la dite seconde borne d'entrée (70);

caractérisée en ce que le dit moyen de ballast (78) est un moyen dans lequel la capacitance est l'impédance prépondérante, qui est connectée en série entre la dite première borne d'entrée (68) et la dite première borne (60) de la première électrode (14a) de la dite lampe (10), la longueur d'arc entre les dites première (14a) et seconde (14b) électrodes étant inférieure à environ 120 mm;

et que le dit moyen d'amorçage (74) est connecté entre la dite seconde borne (62) de la première électrode (14a) de la dite lampe et la dite seconde borne (66) de la seconde électrode (14b) de la dite lampe (10).

2. Lampe fluorescence selon la revendication 1 caractérisée en ce que la dite longueur d'arc est comprise entre 60 et 120 mm environ.

3. Lampe fluorescente selon la revendication 1 caractérisée en ce que la dite partie étranglée (18) comporte un segment d'extrémité défini (24) faisant saillie dans la dite ampoule (12), la dite partie étranglée (18) ayant des parois latérales opposées (26) formant substantiellement le même angle D avec une ligne imaginaire parallèle au dit axe longitudinal de l'arc.

4. Lampe fluorescente selon la revendication 1 caractérisée en ce que la dite ampoule (12) comporte une pluralité de parties étranglées (18) axialement séparées les unes des autres, chacune des dites parties étranglées s'étendant substantiellement sur la périphérie circulaire de la dite ampoule (12) et faisant saillie dans la dite ampoule.

5. Lampe fluorescente selon la revendication 4 caractérisée en ce que chacune des dites parties étranglées (18) comporte un segment d'extrémité défini (24) faisant saillie à l'intérieur de la dite ampoule, chacune des dites parties étranglées (18) ayant des parois latérales opposées (26) formant substantiellement le même angle D avec une ligne imaginaire parallèle au dit axe longitudinal de l'arc.

6. Lampe fluorescente selon la revendication 1 caractérisée en ce que le moyen de ballast (78) du type à conducteur comprend un condensateur (72) d'une capacité prédéterminée.

7. Lampe fluorescente selon la revendication 6 caractérisée en ce que la dite capacité prédéterminée est comprise entre 9 et 30 microFarads environ.

8. Lampe fluorescente selon la revendication 6 caractérisée en ce que le dit moyen de ballast (78) de type à conducteur comprend une résistance (73) de valeur prédéterminée reliée en série avec le dit condensateur.

9. Lampe fluorescente selon la revendication 8 caractérisée en ce que la dite valeur prédéterminée de la résistance (73) est comprise entre 5 et 10 Ohms environ.

10. Lampe fluorescente selon la revendication 9 caractérisée en ce que la dite capacité prédéterminée est comprise entre 9 et 30 microFarads environ.

EP 0 184 214 B1

FIG.1

FIG.2

FIG.3

1

FIG. 4